# EUROPÄISCHE PATENTANMELDUNG

(11) **EP 4 733 136 A1**
(43) Veröffentlichungstag der Anmeldung: **29.04.2026**
(21) Anmeldenummer: 25204484.7
(22) Anmeldetag: 25.09.2025
(51) Int. Cl.: B60P 1/04, B60P 3/40, B60G 17/00

(54) **TRANSPORTFAHRZEUG, SYSTEM UND VERFAHREN**

(30) Priorität: 22.10.2024 DE 102024210200
(71) Anmelder: Scheuerle Fahrzeugfabrik GmbH, 74629 Pfedelbach (DE)
(72) Erfinder: Obst, Raphael Simon, 74629 Pfedelbach (DE)
(74) Vertreter: Ullrich & Naumann PartG mbB

(57) **Zusammenfassung**

Ein Transportfahrzeug, insbesondere selbstangetriebenes Transportfahrzeug, vorzugsweise selbstangetriebenes Modulfahrzeug, mit einem Fahrwerk (1) und einer Hebeeinrichtung (7), wobei das Fahrwerk (1) eine Ladefläche (4) und hintereinander angeordneten Radanordnungen (2, 2') umfasst und wobei die Ladefläche (4) durch die Hebeeinrichtung (7), beispielsweise die Radanordnungen (2, 2'), neigbar ist, dadurch gekennzeichnet, dass eine Sensoreinrichtung (11) mit mindestens einem Sensor (12, 12') angeordnet ist, um eine Neigung des Transportfahrzeugs, insbesondere der Ladefläche (4), und/oder des Transportguts zu bestimmen. Des Weiteren sind ein System (15) für ein Transportfahrzeug sowie ein Verfahren zur automatisierten Neigungsausgleichung eines Transportfahrzeugs oder eines Transportfahrzeugverbands und ein Verfahren zur Vermeidung von Fehlbedienungen eines Transportfahrzeugs oder eines Transportfahrzeugverbands offenbart.

## Beschreibung

Die Erfindung betrifft ein Transportfahrzeug, insbesondere selbstangetriebenes Transportfahrzeug, vorzugsweise selbstangetriebenes Modulfahrzeug, mit einem Fahrwerk und einer Hebeeinrichtung, wobei das Fahrwerk eine Ladefläche und hintereinander angeordneten Radanordnungen umfasst und wobei die Ladefläche durch die Hebeeinrichtung, beispielsweise die Radanordnungen, neigbar ist.

Des Weiteren betrifft die Erfindung ein System für ein Transportfahrzeug.

Weiterhin betrifft die Erfindung ein Verfahren zur automatisierten Neigungsausgleichung eines Transportfahrzeugs oder eines Transportfahrzeugverbands.

Weiterhin betrifft die Erfindung ein Verfahren zur Vermeidung von Fehlbedienungen eines Transportfahrzeugs oder eines Transportfahrzeugverbands.

Aus der Praxis sind Transportfahrzeuge, beispielsweise sog. selbstangetriebenen Transportfahrzeuge und selbstangetriebenen Modulfahrzeuge ("Self-Propelled Modular Transporter" SPMT) vorbekannt, welche zum Transport von schweren Lasten genutzt werden, beispielsweise um Industrieanlagen, Schiffe, Schiffssektionen, Turbinen etc. zu transportieren. Entsprechende Transportfahrzeuge können ein Fahrwerk mit einer Ladefläche und hintereinander angeordneten Radanordnungen aufweisen. Um Neigungen der Straße zu kompensieren, ist es bekannt, dass die Radanordnungen höhenverstellbar ausgebildet sind. Dadurch ist es einem Nutzer mittels einer Bedieneinheit möglich, die Neigung der Ladefläche durch Höhenverstellung der entsprechenden Radanordnung zumindest teilweise auszugleichen und ein Umkippen des Transportfahrzeugs samt Last zu verhindern.

Problematisch ist dabei, dass es sich bei der Neigungskompensation um einen manuellen Prozess handelt, der von einer Person gesteuert wird und somit von den Fähigkeiten und insbesondere der Erfahrung dieser Person als Fahrzeugführer abhängt. Menschliches Versagen bei der Neigungskompensation kann somit zu Fehlbedienungen und zu Unfällen führen.

Der vorliegenden Erfindung liegt daher die Aufgabe zugrunde, ein Transportfahrzeug der eingangs genannten Art derart auszugestalten und weiterzubilden, dass dieses auf einfache Weise sicher bedient werden kann. Des Weiteren soll ein verbessertes System für ein Transportfahrzeug angegebenen werden. Weiterhin soll ein Verfahren zur Handhabung eines Transportfahrzeugs bzw. eines Verbandes von Transportfahrzeugen angegeben werden, welches mit einfachen Mitteln eine sichere Fahrzeugführung ermöglicht.

Erfindungsgemäß wird die voranstehende Aufgabe durch die Merkmale des Anspruches 1 gelöst. Danach ein Transportfahrzeug, insbesondere selbstangetriebenes Transportfahrzeug, vorzugsweise selbstangetriebenes Modulfahrzeug, mit einem Fahrwerk und einer Hebeeinrichtung, wobei das Fahrwerk eine Ladefläche und hintereinander angeordneten Radanordnungen umfasst und wobei die Ladefläche durch die Hebeeinrichtung, beispielsweise die Radanordnungen, neigbar ist, dadurch gekennzeichnet, dass eine Sensoreinrichtung mit mindestens einem Sensor angeordnet ist, um eine Neigung des Transportfahrzeugs, insbesondere der Ladefläche, und/oder des Transportguts zu bestimmen.

In erfindungsgemäßer Weise ist zunächst erkannt worden, dass die Bediensicherheit des Transportfahrzeugs erheblich verbessert werden kann, indem eine Neigung des Transportfahrzeugs, insbesondere der Ladefläche, und/oder des Transportguts bestimmt wird. Hierzu ist eine, beispielsweise in das Transportfahrzeug integrierte, Sensoreinrichtung ausgebildet, die mindestens einen Sensor aufweist, welcher direkt oder indirekt die Bestimmung der Neigung ermöglicht. Durch eine solche konstruktive Maßnahme könnte eine Überwachung der Neigung realisiert werden, so dass eine manuelle Übersteuerung der Neigungseinstellung des Transportfahrzeugs verhindert werden könnte. Dabei ist es denkbar, dass ein oder mehrere Sensoren zur Erfassung der Neigung vorgesehen sind, wobei dieser/diese an bzw. in dem Transportfahrzeug und/oder an bzw. in dem zu transportierenden Transportgut angeordnet sein kann/können.

Im Rahmen dieser Offenbarung ist insbesondere in den Ansprüchen und der Beschreibung der Begriff "Neigung" dahingehend zu verstehen, dass es sich um den Winkel (Neigungswinkel) handelt, den der Normalenvektor einer durch das Transportfahrzeug, insbesondere durch die Ladefläche, definierten Ebene und die durch die Schwerkraft vorgegebenen Lotrichtung miteinander einschließen. Sofern der Normalenvektor und die Lotrichtung parallel zueinander verlaufen, ist die durch das Transportfahrzeug, insbesondere die Ladefläche, definierte Ebene nicht geneigt.

Das im Rahmen dieser Offenbarung, insbesondere in der Beschreibung und den Ansprüchen, beschriebene Transportfahrzeug kann eine Nutzlast von mehreren Tonnen, insbesondere eine Nutzlast bis zu 160 Tonnen, vorzugsweise bis zu 330 Tonnen, aufweisen. Somit kann das Transportfahrzeug für den Transport schwerer Transportgüter bzw. Lasten genutzt werden. Alternativ oder zusätzlich kann das im Rahmen dieser Offenbarung, insbesondere in der Beschreibung und den Ansprüchen, beschriebene Transportfahrzeug dazu ausgebildet sein, mit anderen Transportfahrzeugen, insbesondere hydraulisch, elektrisch und/oder mechanisch, zu einem Transportfahrzeugverband gekoppelt zu werden. Dabei kann es sich bei den gekoppelten Transportfahrzeugen beispielsweise um selbstangetriebene Modulfahrzeuge (SPMT) handeln. Dabei müssen die Transportfahrzeuge nicht zu einem physischen Gesamtfahrzeug mechanisch gekoppelt sein (sog. "fester Verband"), sondern können auch nicht mechanisch miteinander gekoppelte Transportfahrzeuge einen sog. "losen Verband" bilden. Insbesondere kann bei einem losen Verband die mechanische Verbindung der einzelnen Transportfahrzeuge, beispielsweise SPMTs, über das Transportgut erfolgen. Des Weiteren ist wesentlich, dass in einem Transportfahrzeugverband auch bekannte Transportfahrzeuge angeordnet sein können, die somit keine erfindungsgemäße Sensoreinrichtung aufweisen.

Gemäß einer vorteilhaften Ausgestaltung könnte das Transportfahrzeug eine Bedieneinheit, insbesondere eine Fernbedienung, mit einer Anzeigeeinrichtung aufweisen, um die erfasste Neigung darzustellen. Es ist denkbar, dass die Farbe der Darstellung, eine Blinkrate der Darstellung o.ä. an die gemessene Neigung angepasst wird. Beispielsweise könnte eine grüne Anzeige leuchten, wenn die Neigung in einem absolut unkritischen Bereich liegt, und eine gelbe Anzeige, wenn die Neigung in einem Bereich nahe einer Maximalneigung liegt. Ein Bediener der Bedieneinheit kann somit auf einfache Weise darauf hingewiesen werden, wenn eine Betätigung der Hebeeinrichtung notwendig ist. Auch könnte dabei angezeigt werden, wie die Hebeeinrichtung betätigt werden muss, beispielsweise welche Seite des Transportfahrzeugs angehoben und/oder abgesenkt werden sollte, um zumindest teilweise einen Neigungsausgleich zu erreichen. Alternativ oder zusätzlich könnten die aufgrund der Neigung des Transportfahrzeugs blockierten bzw. deaktivierten Teile der Steuerung der Hebeeinrichtung optisch dargestellt werden.

In vorteilhafter Weise kann der Sensor als Neigungssensor, insbesondere als Beschleunigungssensor und/oder Gyroskop, ausgebildet sein. Generell ist es denkbar, dass der Neigungssensor auf einem beliebigen Messprinzip beruht, beispielsweise auf der Brechung eines Lichtstrahls durch einen Flüssigkeitsspiegel oder auf der Nutzung eines kapazitiven Verfahrens, wie dies bei einem Beschleunigungssensor oder einem Gyroskop genutzt werden könnte. Bei einem Gyroskop werden die Winkelbeschleunigungen erfasst und es erfolgt eine Integration - im mathematischen Sinne - der Daten. Bei dem Integrieren könnte jedoch über die Zeit ein Offset entstehen. Ein Beschleunigungssensor misst langfristig den Anteil der Erdbeschleunigung sehr zuverlässig, könnte jedoch mitunter zu stark auf kurzfristige Signalschwankungen reagieren, welche beispielsweise durch Motorvibration etc. ausgelöst werden. Von besonderem Vorteil könnte daher eine Sensorfusion sein, das heißt, die Anordnung eines Gyroskops und eines Beschleunigungssensors, so dass eine algorithmische Verschmelzung von Gyroskop und Beschleunigungssensor erfolgen kann, insbesondere mittels Complementary-Filter, Kalman-Filter etc. Dadurch würden jeweils die Schwächen eines Gyroskops und eines Beschleunigungssensors gegenseitig kompensiert.

In weiter vorteilhafter Weise kann die Sensoreinrichtung zumindest teilweise, vorzugsweise insgesamt, in und/oder an dem Fahrwerk angeordnet sein. Eine solche Konstruktion könnte von Vorteil sein, da die Sensoreinrichtung leicht zugänglich ist und nachgerüstet werden könnte.

Gemäß einer vorteilhaften Ausgestaltung kann die Sensoreinrichtung zumindest teilweise, vorzugsweise insgesamt, in ein Steuergerät des Transportfahrzeugs integriert sein. Dadurch könnte der Vorteil erzielt werden, dass Kommunikationsleitungen eingespart werden können, was sich positiv auf die Störanfälligkeit sowie die Herstellungskosten des Transportfahrzeugs auswirken könnte.

In vorteilhafter Weise kann eine interne Antriebseinrichtung ausgebildet sein. Alternativ oder zusätzlich kann eine externe Antriebseinrichtung angeordnet ist, wobei die externe Antriebseinrichtung mit dem Transportfahrzeug koppelbar ist. Unabhängig davon, ob es sich um eine externe oder eine interne Antriebseinrichtung handelt, könnte diese eine Pumpeneinheit aufweisen, um hydrostatische Antriebe anzutreiben, die an zumindest einigen der Radanordnungen ausgebildet sein könnten. Die zentrale Pumpeneinheit könnte wiederum über einen Verbrennungsmotor, einen Elektroantrieb und/oder einen Hybridantrieb betrieben sein. In weiter vorteilhafter Weise kann die Sensoreinrichtung zumindest teilweise, vorzugsweise insgesamt, in und/oder an der Antriebseinrichtung angeordnet sein. Durch eine solche Konstruktion könnte auf einfache Weise eine Nachrüstung der Sensoreinrichtung in ein bestehendes Transportfahrzeug erfolgen.

Gemäß einer vorteilhaften Ausgestaltung kann mindestens ein Sensor der Sensoreinrichtung dazu ausgebildet sein, an und/oder in dem zu transportierenden Transportgut angeordnet zu sein bzw. mit dieser verbunden zu werden. Eine solche Konstruktion könnte den Vorteil haben, dass die Bestimmung der Neigung unter Berücksichtigung und Nutzung des konkret zu transportierenden Transportguts vorgenommen werden kann. Zusätzlich ist es denkbar, dass der Sensor über ein Kabel und/oder kabellos mit den weiteren Komponenten der Sensoreinrichtung verbunden ist.

In vorteilhafter Weise kann die Ladefläche durch die Hebeeinrichtung um eine parallel zur Längsrichtung der Ladefläche verlaufende erste Achse und/oder um eine senkrecht zur Längsrichtung der Ladefläche verlaufende zweite Achse neigbar sein. Für einen Fachmann ist dabei klar, dass die zweite Achse parallel zur von der Ladefläche gebildeten Ebene verläuft bzw. in dieser Ebene verläuft. Somit könnte es möglich sein, Neigungen des Untergrunds auszugleichen, auf dem sich das Transportfahrzeug bewegt. Des Weiteren ist es denkbar, dass dadurch Beschleunigungskräfte ausgeglichen werden könnten. Die Längsrichtung der Ladefläche entspricht in vorteilhafter Weise der Fahrtrichtung bei einer Geradeausfahrt des Transportfahrzeug.

Gemäß einer vorteilhaften Ausgestaltung können die Radanordnungen, vorzugsweise hydraulisch, höhenverstellbare Pendelachsen aufweisen. Damit könnte der Vorteil erzielt werden, dass die Radanordnungen als Hebeeinrichtung genutzt werden können. In vorteilhafter Weise könnten die Radanordnungen dabei einzeln oder in definierten Gruppen in der Höhe bewegbar ausgebildet sein, um eine Neigung der Ladefläche in unterschiedliche Richtungen zu ermöglichen. Somit könnte ein Neigungsausgleich entlang unterschiedlicher Erstreckungsrichtungen des Transportfahrzeugs ermöglicht werden.

In vorteilhafter Weise kann eine Steuereinheit angeordnet sein, um von dem mindestens einen Sensor ermittelte, insbesondere digitale, Sensordaten zu verarbeiten. Die Steuereinheit könnte derart ausgebildet sein, dass Sensordaten beispielsweise über eine digitale Kommunikation, insbesondere Bus-Kommunikation, in einem Netzwerk von verschiedenen Elektroniken verarbeitet werden. Die Elektronik könnte aber auch ein Computer, ein Embedded System, ein Mikrocontroller, ein Mobilsteuergerät, eine speicherprogrammierbare Steuerung, oder sonstiges ähnliches Konstrukt sein, das geeignet ist, Sensordaten zu verarbeiten und entweder direkt Einfluss auf die Höhenverstellung zu nehmen oder die Sensordaten im Fahrzeugverbund über eine Buskommunikationsleitung für andere Rechnereinheiten zur Verfügung zu stellen, die ihrerseits mittelbar Einfluss auf die Höhenbetätigung nehmen.

Gemäß einer vorteilhaften Ausgestaltung kann die Sensoreinrichtung ein Bestandteil der Steuereinheit sein. Dies hat den Vorteil, dass sich die Sensoreinrichtung sowie die Steuereinheit, welche die Sensordaten verarbeitet, gemeinsam installiert und ggf. bei einem bestehenden Transportfahrzeug nachgerüstet werden können.

In vorteilhafter Weise kann eine Steuereinheit angeordnet sein, wobei die Steuereinheit dazu ausgebildet sein kann, die Neigung des Transportfahrzeugs, insbesondere der Ladefläche, und/oder eines Transportguts mittels der Sensoreinrichtung fortlaufend zu bestimmen und bei Überschreitung einer Maximalneigung einen Ausgleich der Neigung des Transportfahrzeugs, insbesondere der Ladefläche, mittels einer Anpassung der Neigung der Ladefläche anhand der Hebeeinrichtung durchzuführen. Dadurch könnte die Gefahr des Umkippens des Transportfahrzeugs verringert werden. Des Weiteren könnte ein Transport schneller erfolgen, da ein Bediener des Transportfahrzeugs nicht die Nivellierung zu überwachen hat und sich anderen Aufgaben widmen kann.

Gemäß einer vorteilhaften Ausgestaltung kann eine Steuereinheit angeordnet sein, wobei die Steuereinheit dazu ausgebildet sein kann,
- eine Neigung des Transportfahrzeugs, insbesondere der Ladefläche, und/oder eines Transportguts unter Nutzung der Sensoreinrichtung zu bestimmen,
- eine manuelle Steuerung der Hebeeinrichtung und/oder eine Fahrt des Transportfahrzeugs freizugeben, wenn die erfasste Neigung des Transportfahrzeugs kleiner oder gleich einer Maximalneigung ist und
- zumindest Teile der manuellen Steuerung der Hebeeinrichtung zu blockieren und/oder das Transportfahrzeug zu verlangsamen, insbesondere anzuhalten, wenn die erfasste Neigung des Transportfahrzeugs größer als die Maximalneigung ist.

Eine entsprechend ausgebildete Steuereinheit kann den Vorteil haben, dass Fehlbedienungen auf einfache Weise verhindert werden. Die erfindungsgemäße Steuereinheit kann die Merkmale und Vorteile der erfindungsgemäßen Verfahren aufweisen.

In Bezug auf das System ist die zugrunde liegende Aufgabe durch die Merkmale von Anspruch 11 gelöst. Damit ist ein System für ein Transportfahrzeug, insbesondere ein selbstangetriebenes Transportfahrzeug, vorzugsweise ein selbstangetriebenes Modulfahrzeug, beispielsweise nach einem der Ansprüche 1 bis 10, angegeben, mit einer Sensoreinrichtung mit mindestens einem Sensor, um eine Neigung des Systems zu bestimmen, und mit einer Steuereinheit, um von dem mindestens einen Sensor erzeugte, insbesondere digitale, Sensordaten zu verarbeiten.

In erfindungsgemäßer Weise ist erkannt worden, dass die Bestimmung der Neigung des Systems genutzt werden kann, um die Neigung des Transportfahrzeugs bzw. des Transportguts zu ermitteln, in welchem das System eingebaut werden kann. Somit ist es durch eine einfache Konstruktion möglich, die relevante Neigung zu bestimmen und zur Verbesserung des sicheren Betriebs des Transportfahrzeugs zu nutzen. Des Weiteren könnte durch das erfindungsgemäße System ein Transportfahrzeug auf einfache Weise nachgerüstet werden.

Die Sensoreinrichtung und die Steuereinheit des erfindungsgemäßen Systems können die in Bezug auf das erfindungsgemäße Transportfahrzeug beschriebenen Merkmale und Vorteile aufweisen.

Gemäß einer vorteilhaften Ausgestaltung ist es zusätzlich denkbar, dass das System Teil eines Steuergeräts für ein solches Transportfahrzeug ist.

In Bezug auf das Verfahren zur automatisierten Neigungsausgleichung ist die zugrunde liegende Aufgabe durch die Merkmale von Anspruch 12 gelöst. Damit ist ein Verfahren zur automatisierten Neigungsausgleichung eines Transportfahrzeugs, insbesondere eines selbstangetriebenes Transportfahrzeug, vorzugsweise eines selbstangetriebenes Modulfahrzeug, beispielsweise eines Transportfahrzeugs nach einem der Ansprüche 1 bis 10 oder eines Transportfahrzeugverbands umfassend mindestens ein solches Transportfahrzeug angegeben, wobei das Transportfahrzeug ein Fahrwerk und eine Hebeeinrichtung aufweist, wobei das Fahrwerk eine Ladefläche und hintereinander angeordneten Radanordnungen umfasst, wobei die Ladefläche durch die Hebeeinrichtung, beispielsweise die Radanordnungen, neigbar ist, wobei von einer Steuereinheit eine Neigung des Transportfahrzeugs, insbesondere der Ladefläche, und/oder eines Transportguts mittels einer Sensoreinrichtung mit mindestens einem Sensor, vorzugsweise kontinuierlich, insbesondere in regelmäßigen oder unregelmäßigen zeitlichen Abständen, bestimmt wird und wobei bei Überschreitung eine Maximalneigung ein Ausgleich der Neigung des Transportfahrzeugs, insbesondere der Ladefläche, von der Steuereinheit durch Neigen der Ladefläche mittels der Hebeeinrichtung erfolgt.

In erfindungsgemäßer Weise ist erkannt worden, dass die Bedienung des Transportfahrzeugs wesentlich vereinfacht werden kann, wenn der Neigungsausgleich automatisch über die Steuereinheit erfolgt. Hierzu wird in weiter erfindungsgemäßer Weise die Neigung bestimmt und ermittelt, ob die Neigung oberhalb einer Maximalneigung liegt. Sofern dies der Fall ist, kann von der Steuereinheit die Hebeeinrichtung derart betätigt werden, dass ein Neigungsausgleich des Transportfahrzeugs erfolgt. Damit wird ein erhöhter Komfort für den Bediener sowie die Transportbegleitung erreicht, so dass der Fokus auf andere Aufgaben im Zusammenhang mit dem Transport gelegt werden kann. Dies kann mit einem schnelleren und somit kostengünstigeren Transport einhergehen. Es ist denkbar, dass das erfindungsgemäß Verfahren derart realisiert ist, dass ein stetiges Ausnivellieren des Transportfahrzeugs erfolgt, beispielsweise durch einen entsprechend ausgebildeten Regelkreis.

Das erfindungsgemäße Verfahren zur automatisierten Neigungsausgleichung kann die verfahrensmäßig geprägten Merkmale und Vorteile des erfindungsgemäßen Transportfahrzeugs aufweisen.

In Bezug auf das Verfahren zur Vermeidung von Fehlbedienungen ist die zugrunde liegende Aufgabe durch die Merkmale von Anspruch 13 gelöst. Damit ist ein Verfahren zur Vermeidung von Fehlbedienungen eines Transportfahrzeugs, insbesondere eines selbstangetriebenen Transportfahrzeugs, vorzugsweise eines selbstangetriebenen Modulfahrzeugs, beispielsweise eines Transportfahrzeugs nach einem der Ansprüche 1 bis 10 oder eines Transportfahrzeugverbands umfassend mindestens ein solches Transportfahrzeug angegeben, wobei das Transportfahrzeug ein Fahrwerk und eine Hebeeinrichtung aufweist, wobei das Fahrwerk eine Ladefläche und hintereinander angeordneten Radanordnungen umfasst, wobei die Ladefläche durch die Hebeeinrichtung, beispielsweise die Radanordnungen, neigbar ist, umfassend die folgenden Verfahrensschritte:
- Bestimmung einer Neigung des Transportfahrzeugs, insbesondere der Ladefläche, und/oder eines Transportguts von einer Steuereinheit unter Nutzung einer Sensoreinrichtung mit mindestens einem Sensor,
- Freigeben einer manuellen Steuerung der Hebeeinrichtung und/oder einer Fahrt des Transportfahrzeugs, wenn die erfasste Neigung des Transportfahrzeugs kleiner oder gleich einer Maximalneigung ist und
- Blockieren zumindest eines Teils der manuellen Steuerung der Hebeeinrichtung und/oder Verlangsamen, insbesondere Anhalten, des Transportfahrzeugs, wenn die erfasste Neigung des Transportfahrzeugs größer als die Maximalneigung ist.

In erfindungsgemäßer Weise ist erkannt worden, dass sich die Sicherheit für den Bediener, das Transportgut, das Transportfahrzeug und die Transportbegleitung wesentlich erhöhen lässt, wenn das Risiko von Fehlbedienungen verringert wird. Hierzu wird in erfindungsgemäßer Weise die manuelle Steuerung der Hebeeinrichtung, beispielsweise über eine Fernbedienung, nur dann freigegeben, wenn die Neigung des Transportfahrzeugs geringer ist als eine definierte Maximalneigung. Im Konkreten kann dadurch erreicht werden, dass die manuelle Steuerung der Hebeeinrichtung lediglich in einem unkritischen Bereich möglich ist. In weiter erfindungsgemäßer Weise kann zumindest der Teil der manuellen Steuerung blockiert werden, welcher dazu führen würde, dass das Transportfahrzeug noch weiter geneigt wird. Beispielsweise könnte der Teil der manuellen Steuerung blockiert werden, welcher ein Anheben entlang einer Längsseite des Transportfahrzeugs erlaubt, wenn dadurch die Neigung erhöht wird. Hingegen könnte ein Absenken dieser Längsseite oder ein Anheben der gegenüberliegenden Längsseite freigegeben sein. Somit wird erreicht, dass lediglich eine Verringerung der Neigung manuell erfolgen kann, nicht jedoch eine Verstärkung. Mit anderen Worten kann somit lediglich ein manuelles Ausnivellieren in eine "sichere Richtung" zulässig sein. Lediglich das weitere Neigen in die kritische Richtung könnte unterbunden werden. Alternativ oder zusätzlich könnte das Transportfahrzeug verlangsamt oder vollständig angehalten werden, wenn eine zu starke Neigung vorliegt. Dadurch könnte beispielsweise verhindert werden, dass sich das Transportfahrzeug weiter auf einen zunehmend steileren Straßenverlauf fortbewegt, ohne zunächst einen Ausgleich einer etwaigen Neigung durchzuführen

Das erfindungsgemäße Verfahren zur Vermeidung von Fehlbedienungen eines Transportfahrzeugs kann die verfahrensmäßig geprägten Merkmale und Vorteile des erfindungsgemäßen Transportfahrzeugs aufweisen.

In vorteilhafter Weise kann die Blockierung der manuellen Steuerung durch Betätigung eines Bedienelements aufhebbar sein. Dies hat den Vorteil, dass das Transportfahrzeug vollumfänglich in seiner Funktion erhalten bleibt, wobei durch die Notwendigkeit einer manuellen Aufhebung der Blockierung die Gefahr einer Fehlbedienung verringert werden kann.

Gemäß einer vorteilhaften Ausgestaltung kann die Bestimmung die Neigung und somit die Freigabe und/oder die Blockierung der manuellen Steuerung kontinuierlich, insbesondere in regelmäßigen oder unregelmäßigen zeitlichen Abständen, erfolgen. Dadurch kann der Vorteil erzielt werden, dass stets zumindest im Wesentlichen die aktuelle Neigung des Transportfahrzeugs zur Verarbeitung durch die Steuereinheit vorliegt.

Es gibt nun verschiedene Möglichkeiten, die Lehre der vorliegenden Erfindung in vorteilhafter Weise auszugestalten und weiterzubilden. Dazu ist einerseits auf die den Ansprüchen 1 und 13 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1a, b: in einer schematischen Darstellung ein Transportfahrzeug mit einem Transportgut auf einem geneigten Untergrund ohne Neigungsausgleich (Fig. 1a) und mit Neigungsausgleich (Fig. 1b),
- Fig. 2: in einer schematischen Darstellung, eine perspektivische Ansicht eines erfindungsgemäßen Transportfahrzeugs,
- Fig. 3: in einer schematischen Darstellung, eine teilweise geschnittene Ansicht des Transportfahrzeugs gemäß Fig. 2,
- Fig. 4: eine vergrößerte Darstellung eines Details von Fig. 3,
- Fig. 5: in einer schematischen Darstellung, eine teilweise geschnittene Ansicht eines weiteren Ausführungsbeispiels einer erfindungsgemäßen Transportfahrzeugs,
- Fig. 6: in einer schematischen Darstellung, ein Ausführungsbeispiel eines erfindungsgemäßen Systems,
- Fig. 7: in einer schematischen Darstellung, eine Seitenansicht eines weiteren Ausführungsbeispiels eines erfindungsgemäßen Transportfahrzeugs,
- Fig. 8: ein Blockschaltbild eines Ausführungsbeispiels eines erfindungsgemäßen Verfahrens zur automatisierten Neigungsausgleichung eines Transportfahrzeugs oder eines Transportfahrzeugverbands, und
- Fig. 9: ein Blockschaltbild eines Ausführungsbeispiels eines erfindungsgemäßen zur Vermeidung von Fehlbedienungen eines Transportfahrzeugs oder eines Transportfahrzeugverbands.

Zur Verbesserung der Übersichtlichkeit ist nicht jedes Element in den Figuren mit einem Bezugszeichen versehen.

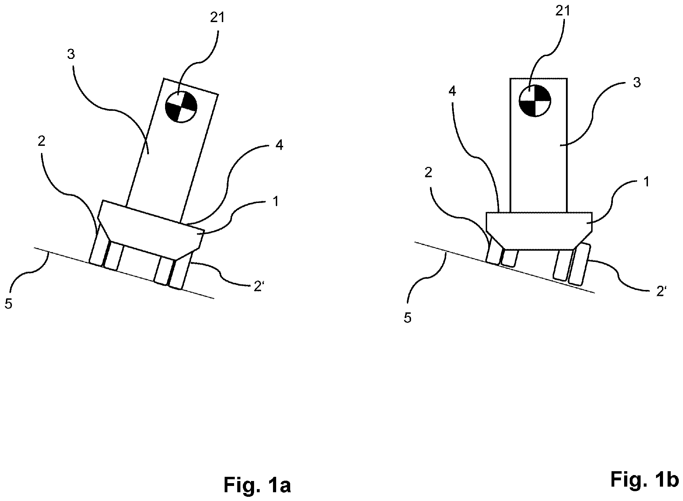

Die Fig. 1a, b zeigen in einer schematischen Darstellung jeweils ein Transportfahrzeug mit einem Fahrwerk 1 mit Radanordnungen 2, 2', bei dem ein Transportgut 3 auf der Ladefläche 4 angeordnet ist. Das Transportfahrzeug bewegt sich auf einem geneigten Untergrund 5. In Fig. 1a erfolgt kein Niveauausgleich des Transportfahrzeugs, so dass die Ladefläche 4 und somit das Transportgut 3 entsprechend dem Untergrund 5 geneigt sind. Sobald der Masseschwerpunkt 21 über eine Kipplinie hinaus geneigt ist, droht das Transportfahrzeug umzustürzen.

Um dies zu vermeiden, kann über die Radanordnungen 2, 2' die Neigung der Ladefläche 4 angepasst werden. In dem hier gezeigten Ausführungsbeispiel können dazu über die auf der linken Fahrzeugseite angeordneten Randanordnungen 2 die Ladefläche 4 abgesenkt und/oder über die auf der rechten Fahrzeugseite angeordneten Radanordnungen 2' die Ladefläche 4 angehoben werden (vgl. Fig. 1b). Sofern diese Niveauausgleichung händisch durch einen Bediener des Transportfahrzeugs erfolgt, besteht die Gefahr, dass, insbesondere durch menschliches Versagen, die Ladefläche derart bewegt wird, dass gerade kein Niveauausgleich stattfindet, was zu einem Kippen des Transportfahrzeugs führen kann.

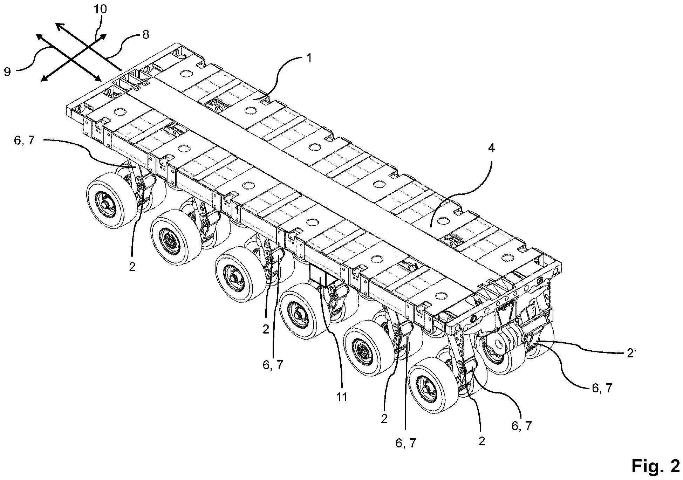

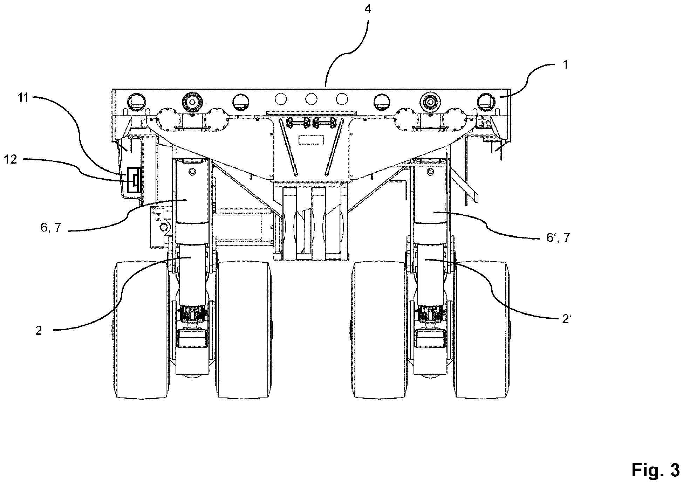

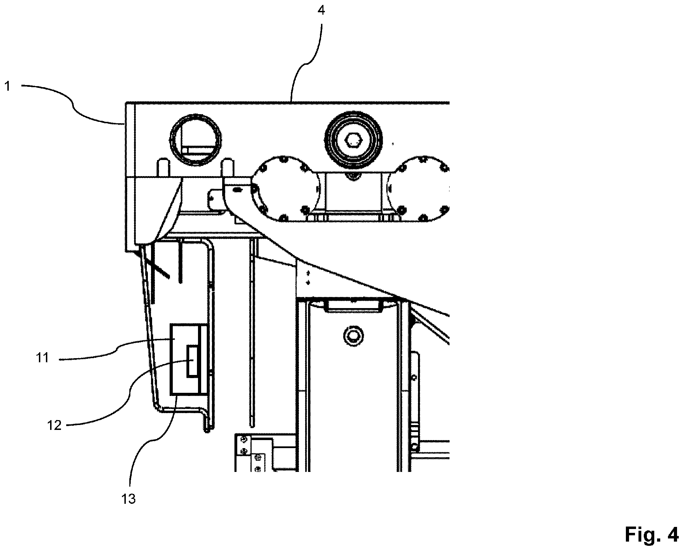

Die Fig. 2 bis 4 zeigen ein Ausführungsbeispiel eines erfindungsgemäßen Transportfahrzeugs. Dieses ist als Modulfahrzeug, insbesondere als selbstangetriebenes Modulfahrzeug (SPMT), ausgebildet, was jedoch nicht zwangsweise der Fall sein muss. Auch andere Ausgestaltungen des Transportfahrzeugs sind denkbar. Es ist denkbar, dass das hier gezeigte Modulfahrzeug mit einem oder mehreren weiteren Modulfahrzeugen im festen und/oder im losen Verbund gekoppelt werden könnte.

Das Transportfahrzeug weist ein Fahrwerk 1 mit einer Ladefläche 4 und hintereinander angeordneten Radanordnungen 2, 2' auf. Die Radanordnungen 2, 2' sind hierbei als höhenverstellbare Pendelachsen 6, 6' ausgebildet, welche eine Hebeeinrichtung 7 realisieren. Über die Höhenverstellung der Pendelachsen 6, 6' kann somit die Neigung der Ladefläche 4 angepasst werden, beispielsweise indem die Pendelachsen 6 einer Fahrzeugseite abgesenkt und/oder die Pendelachsen 6' der anderen Fahrzeugseite angehoben werden. Dies führt zu einer Neigung der Ladefläche um eine erste Achse 9, die parallel zur Längsrichtung 8 der Ladefläche 4 verläuft. Sofern in Längsrichtung 8 der Ladefläche 4 gesehen die vorderen Pendelachsen 6, 6' angehoben und/oder die hinteren Pendelachsen 6,6' angesenkt werden, kann die Ladefläche 4 um eine senkrecht zur Längsrichtung 8 verlaufende zweite Achse 10 geneigt werden. Dabei ist es möglich, die Lage der erste Achsen 9 und der zweiten Achse 10 über die, beispielsweise hydraulische, gruppierte Ansteuerung der Radanordnungen einzustellen und somit in ihrer Lage zu verändern.

Des Weiteren ist eine Sensoreinrichtung 11 ausgebildet, die mindestens einen Sensor 12, 12' aufweist und zur Bestimmung der Neigung des Transportfahrzeugs bzw. der Ladefläche 4 dient. Mittelbar wird dabei auch die Neigung des Transportguts 3 bestimmt, das auf der Ladefläche 4 angeordnet ist.

In dem Ausführungsbeispiel gemäß den Fig. 2 bis 4 weist die Sensoreinrichtung 11 ein Gehäuse 13 auf, in dem ein einzelner Sensor 12 angeordnet ist, wobei auch mehr als ein Sensor 12 vorgesehen sein kann. Das Gehäuse 13 ist an dem Fahrwerk 1 bzw. der Ladefläche 4 angeordnet, könnte aber auch an einer anderen Stelle des Transportfahrzeugs angeordnet sein. Die Sensoreinrichtung 11 ist mit einer nicht dargestellten Steuereinheit verbunden, welche die von der Sensoreinrichtung 11 ermittelten bzw. aufgenommenen Sensordaten verarbeitet. Die Steuereinheit kann dazu ausgebildet sein, das erfindungsgemäße Verfahren zur automatisierten Neigungsausgleichung eines Transportfahrzeugs und/oder das erfindungsgemäße Verfahren zur Vermeidung von Fehlbedienungen eines Transportfahrzeugs durchzuführen.

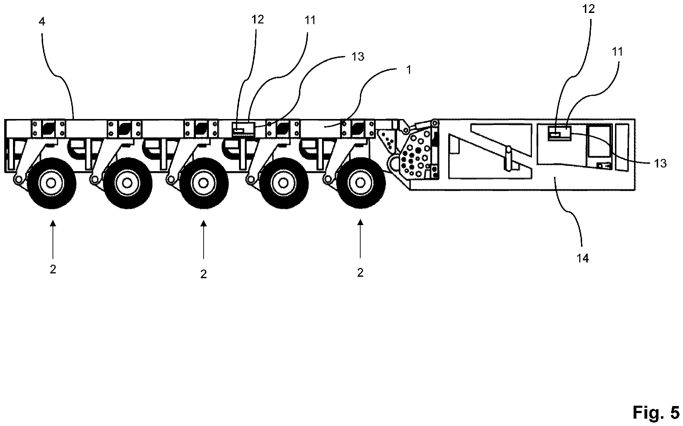

Fig. 5 zeigt ein weiteres Ausführungsbeispiel eines erfindungsgemäßen Transportfahrzeugs. Diese entspricht im Wesentlichen dem in den Fig. 2 bis 4 gezeigten Transportfahrzeug, so dass auf die diesbezügliche Figurenbeschreibung verwiesen wird. Der wesentliche Unterschied besteht darin, dass zusätzlich eine externe Antriebseinrichtung 13, beispielsweise ein sog. "Power Pack Unit", mit dem Transportfahrzeug verbunden ist, insbesondere um einen hydraulischen Antrieb zu ermöglichen. Die externe Antriebseinrichtung 13 kann hydraulisch, elektrisch und mechanische mit dem Transportfahrzeug verbunden sein und könnte einen Antrieb, beispielsweise einen Verbrennungsmotor und/oder einen Elektromotor, aufweisen. Des Weiteren umfasst die Sensoreinrichtung 11 einen Sensor 12, der an der Ladefläche 4 angeordnet ist und einen weiteren Sensor 12', der an der Antriebseinheit 13 positioniert ist.

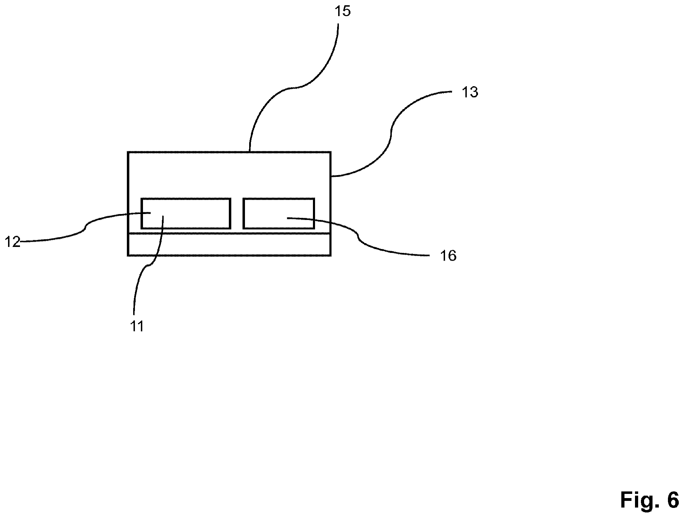

Fig. 6 zeigt ein Ausführungsbeispiel eines erfindungsgemäßen Systems 15 für ein Transportfahrzeug. Das System 15 weist eine Sensoreinrichtung 11 mit mindestens einem Sensor 12 und eine Steuereinheit 16 auf. Die Sensoreinrichtung 11 dient zur Bestimmung der Neigung des Systems. Wenn dieses an einem Transportfahrzeug und/oder einem Transportgut angeordnet ist, kann somit mittelbar deren Neigung bestimmt werden. Die Sensoreinrichtung 11 und die Steuereinheit 16 sind in einem gemeinsamen Gehäuse 13 angeordnet. Die Steuereinheit 16 kann beispielsweise als Recheneinheit bzw. Microcontroller etc. ausgebildet sein. Das System 15 weist den Vorteil auf, dass es auf einfache Weise an einem Transportfahrzeug, einem Transportgut 3 und/oder einer Antriebseinheit 14 angeordnet werden kann. Dabei ist es jedoch auch denkbar, dass die Sensoreinrichtung 11 und die Steuereinheit 16 nicht in einem gemeinsamen Gehäuse 13 vorgesehen sind.

Die Steuereinheit 16 des Systems 15 kann dazu ausgebildet sein, das erfindungsgemäße Verfahren zur automatisierten Neigungsausgleichung eines Transportfahrzeugs und/oder das erfindungsgemäße Verfahren zur Vermeidung von Fehlbedienungen eines Transportfahrzeugs durchzuführen.

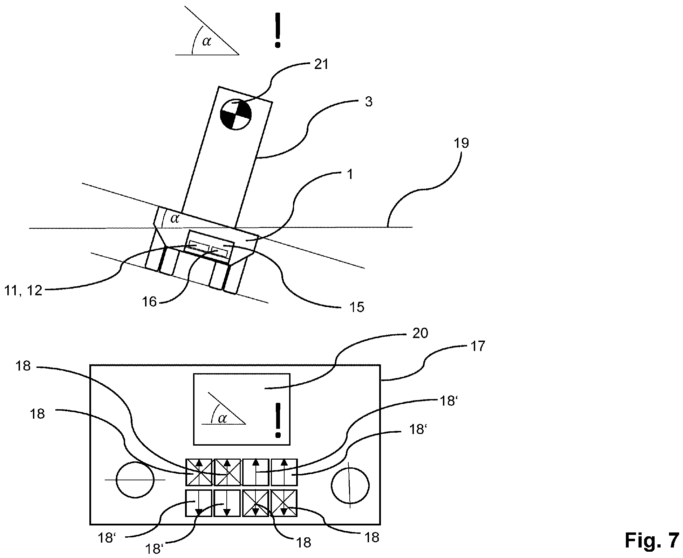

Fig. 7 zeigt in einer schematischen Darstellung eine Seitenansicht eines weiteren Ausführungsbeispiels einer erfindungsgemäßen Transportfahrzeugs. Das Transportfahrzeug kann das in Fig. 6 gezeigte Ausführungsbeispiel eines erfindungsgemäßen Systems 15 aufweisen und kann des Weiteren gemäß den Ausführungsbeispielen gemäß den Fig. 2 bis 5 ausgebildet sein. Des Weiteren ist eine Bedieneinheit 17, insbesondere eine Fernbedienung, angeordnet, die zur manuellen Steuerung der Hebeeinrichtung 7, nämlich der einzelnen Pendelachsen 6, 6' ausgebildet ist. Die einzelnen Pendelachsen 6, 6' können über die Bedienelemente 18, 18' ausgewählt und sodann ausgefahren oder abgesenkt werden.

In dem hier gezeigten Ausführungsbeispiel befindet sich das Transportfahrzeug auf einem geneigten Untergrund 5, so dass die Ladefläche 4 gegenüber der Horizontalen 19 um einen Neigungswinkel α geneigt ist. Da der Neigungswinkel α größer als ein maximaler Neigungswinkel α* ist, sind lediglich die Bedienelemente 18' der manuellen Steuerung freigegeben, durch deren Betätigung die Neigung des Transportfahrzeugs bzw. der Ladefläche 4 ausgeglichen wird. Die weiteren Bedienelemente 18 sind blockiert, was durch das "X" dargestellt ist. Zusätzlich kann über eine optische Einrichtung, beispielsweise ein Display 20, der Neigungswinkel α bzw. die zu starke Neigung einem Nutzer dargestellt werden.

Alternativ oder zusätzlich könnte auf der Bedieneinheit 17 ein für die Anfahrt/Weiterfahrt genutztes Bedienelement blockiert sein oder das Transportfahrzeug automatisch verlangsamt bzw. angehalten werden, wenn der hier dargestellte maximale Neigungswinkel α* erreicht ist.

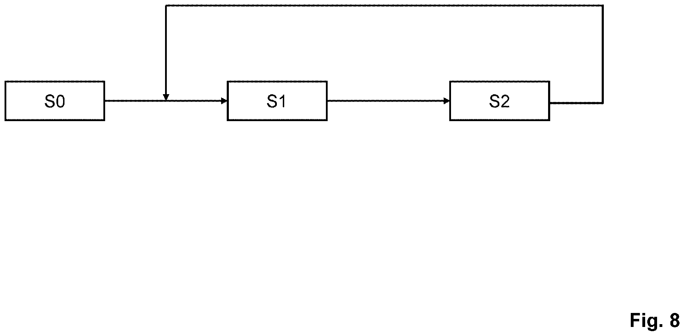

Fig. 8 zeigt ein Blockschaltbild eines Ausführungsbeispiels eines erfindungsgemäßen Verfahrens zur automatisierten Neigungsausgleichung eines Transportfahrzeugs oder eines Transportfahrzeugverbands. Das Transportfahrzeug kann beispielsweise entsprechend einem der Ausführungsbeispiel der voranstehenden Figurenbeschreibung ausgebildet sein.

In einem Schritt S1 wir von einer Steuereinheit eine Neigung des Transportfahrzeugs, insbesondere der Ladefläche, und/oder eines Transportguts mittels einer Sensoreinrichtung mit mindestens einem Sensor, vorzugsweise kontinuierlich, insbesondere in regelmäßigen oder unregelmäßigen zeitlichen Abständen, bestimmt. In einem weiteren Schritt S2 erfolgt bei Überschreitung einer Maximalneigung ein Ausgleich der Neigung des Transportfahrzeugs, insbesondere der Ladefläche, von der Steuereinheit durch Neigen der Ladefläche mittels der Hebeeinrichtung. Optional kann in einem Schritt S0 eine Parametrierung und Aktivierung durch den Benutzer erfolgen.

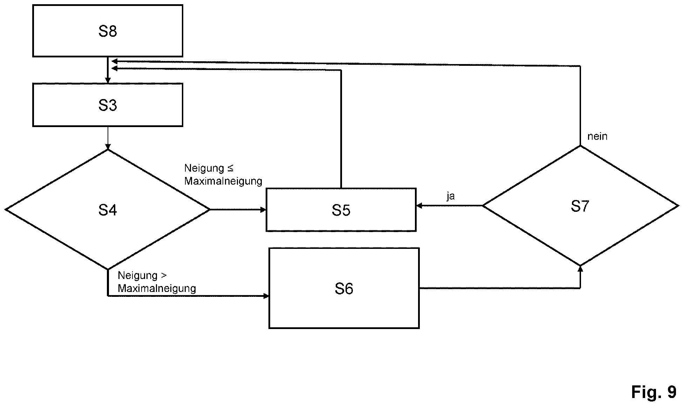

Fig. 9 zeigt ein Blockschaltbild eines Ausführungsbeispiels eines erfindungsgemäßen Verfahrens zur Vermeidung von Fehlbedienungen eines Transportfahrzeugs oder eines Transportfahrzeugverbands. Das Transportfahrzeug kann beispielsweise entsprechend einem der Ausführungsbeispiel der voranstehenden Figurenbeschreibung ausgebildet sein.

In einem Schritt S3 wird von einer Steuereinheit eine Neigung des Transportfahrzeugs, insbesondere der Ladefläche, und/oder eines Transportguts unter Nutzung einer Sensoreinrichtung mit mindestens einem Sensor bestimmt. In einem Schritt S4 wird bestimmt, ob die erfasste Neigung des Transportfahrzeugs kleiner gleich oder größer als eine Maximalneigung ist. Sofern die erfasste Neigung kleiner oder gleich der Maximalneigung ist, wird in einem Schritt S5 eine manuelle Steuerung der Hebeeinrichtung und/oder einer Fahrt des Transportfahrzeugs freigegeben. Der Bediener ist in dieser Situation somit zumindest im Wesentlichen frei in seiner Steuerung/Bedienung des Transportfahrzeugs. Sofern die erfasste Neigung des Transportfahrzeugs größer als die Maximalneigung ist, werden in einem Schritt S6 zumindest ein Teil der manuellen Steuerung der Hebeeinrichtung blockiert und/oder die Fahrt des Transportfahrzeugs verlangsamt, insbesondere das Transportfahrzeug angehalten.

Gemäß einer optionalen Ausgestaltung kann in einem Schritt S7 ggf. die Blockierung der Hebeeinrichtung bzw. der Fahrt aufgehoben werden, wodurch mit dem Übergang zu Schritt S5 die manuelle Steuerung der Hebeeinrichtung und/oder einer Fahrt des Transportfahrzeugs wieder freigegeben wird. Gemäß einer weiteren optionalen Ausgestaltung kann in einem Schritt S8 eine Parametrierung und Aktivierung durch den Benutzer erfolgen.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Lehre lediglich zur Erörterung der beanspruchten Lehre dienen, diese jedoch nicht auf die Ausführungsbeispiele einschränken.

### Bezugszeichenliste

- 1: Fahrwerk
- 2, 2': Radanordnung
- 3: Transportgut
- 4: Ladefläche
- 5: Untergrund
- 6, 6': Pendelachse
- 7: Hebeeinrichtung
- 8: Längsrichtung
- 9: erste Achse
- 10: zweite Achse
- 11: Sensoreinrichtung
- 12, 12': Sensor
- 13: Gehäuse
- 14: Antriebseinheit
- 15: System
- 16: Steuereinheit
- 17: Bedieneinheit
- 18, 18': Bedienelemente
- 19: Horizontalen
- 20: Display
- 21: Masseschwerpunkt
- S1: Schritt
- S2: Schritt
- S3: Schritt
- S4: Schritt
- S5: Schritt
- S6: Schritt
- S7: Schritt
- S8: Schritt

## Patentansprüche

1. Transportfahrzeug, insbesondere selbstangetriebenes Transportfahrzeug, vorzugsweise selbstangetriebenes Modulfahrzeug, mit einem Fahrwerk (1) und einer Hebeeinrichtung (7), wobei das Fahrwerk (1) eine Ladefläche (4) und hintereinander angeordneten Radanordnungen (2, 2') umfasst und wobei die Ladefläche (4) durch die Hebeeinrichtung (7), beispielsweise die Radanordnungen (2, 2'), neigbar ist, **dadurch gekennzeichnet, dass** eine Sensoreinrichtung (11) mit mindestens einem Sensor (12, 12') angeordnet ist, um eine Neigung des Transportfahrzeugs, insbesondere der Ladefläche (4), und/oder des Transportguts (3) zu bestimmen.

2. Transportfahrzeug nach Anspruch 1, **dadurch gekennzeichnet, dass** der Sensor (12, 12') als Neigungssensor, insbesondere als Beschleunigungssensor und/oder als Gyroskop, ausgebildet ist.

3. Transportfahrzeug nach Anspruch 1 oder 2, **dadurch gekennzeichnet, dass** die Sensoreinrichtung (11) zumindest teilweise, vorzugsweise insgesamt, in und/oder an dem Fahrwerk (1) angeordnet ist, und/oder
dass die Sensoreinrichtung (11) zumindest teilweise, vorzugsweise insgesamt, in ein Steuergerät des Transportfahrzeugs integriert ist.

4. Transportfahrzeug nach einem der Ansprüche 1 bis 3, **dadurch gekennzeichnet, dass** eine interne Antriebseinrichtung ausgebildet ist und/oder dass eine externe Antriebseinrichtung angeordnet ist, wobei die externe Antriebseinrichtung mit dem Transportfahrzeug koppelbar ist.

5. Transportfahrzeug nach Anspruch 4, **dadurch gekennzeichnet, dass** die Sensoreinrichtung (11) zumindest teilweise, vorzugsweise insgesamt, in und/oder an der Antriebseinrichtung angeordnet ist.

6. Transportfahrzeug nach einem der Ansprüche 1 bis 5, **dadurch gekennzeichnet, dass** mindestens ein Sensor (12, 12') der Sensoreinrichtung (11) dazu ausgebildet ist, an und/oder in dem Transportgut (3) angeordnet zu sein.

7. Transportfahrzeug nach einem der Ansprüche 1 bis 6, **dadurch gekennzeichnet, dass** die Ladefläche (4) durch die Hebeeinrichtung (7) um eine parallel zur Längsrichtung (8) der Ladefläche (4) verlaufende erste Achse (9) und/oder um eine senkrecht zur Längsrichtung (8) der Ladefläche (4) verlaufende zweite Achse (10) neigbar ist, und/oder
dass die Radanordnungen (2, 2'), vorzugsweise hydraulisch, höhenverstellbare Pendelachsen (6, 6') aufweisen.

8. Transportfahrzeug nach einem der Ansprüche 1 bis 7, **dadurch gekennzeichnet, dass** eine Steuereinheit (16) angeordnet ist, um von dem mindestens einen Sensor (12, 12') erzeugte, insbesondere digitale, Sensordaten zu verarbeiten, vorzugsweise, wobei die Sensoreinrichtung (11) Bestandteil der Steuereinheit (16) ist.

9. Transportfahrzeug nach einem der Ansprüche 1 bis 8, **dadurch gekennzeichnet, dass** eine Steuereinheit (16) angeordnet ist, wobei die Steuereinheit (16) dazu ausgebildet ist, die Neigung des Transportfahrzeugs, insbesondere der Ladefläche (4), und/oder des Transportguts (3) mittels der Sensoreinrichtung (11) fortlaufend zu bestimmen und bei Überschreitung mindestens einer Maximalneigung einen Ausgleich der Neigung des Transportfahrzeugs, insbesondere der Ladefläche (4), mittels einer Anpassung der Neigung der Ladefläche (4) anhand der Hebeeinrichtung (7) durchzuführen.

10. Transportfahrzeug nach einem der Ansprüche 1 bis 9, **dadurch gekennzeichnet, dass** eine Steuereinheit (16) angeordnet ist, wobei die Steuereinheit (16) dazu ausgebildet ist,
- eine Neigung des Transportfahrzeugs, insbesondere der Ladefläche (4), und/oder eines Transportguts (3) unter Nutzung der Sensoreinrichtung (11) zu bestimmen,
- eine manuelle Steuerung der Hebeeinrichtung (7) und/oder eine Fahrt des Transportfahrzeugs freizugeben, wenn die erfasste Neigung des Transportfahrzeugs kleiner oder gleich mindestens einer Maximalneigung ist und
- zumindest Teile der manuellen Steuerung der Hebeeinrichtung (7) zu blockieren und/oder das Transportfahrzeug zu verlangsamen, insbesondere anzuhalten, wenn die erfasste Neigung des Transportfahrzeugs größer als mindestens eine Maximalneigung ist.

11. System (15) für ein Transportfahrzeug, insbesondere selbstangetriebenes Transportfahrzeug, vorzugsweise selbstangetriebenes Modulfahrzeug, beispielsweise nach einem der Ansprüche 1 bis 10, mit einer Sensoreinrichtung (11) mit mindestens einem Sensor (12, 12'), um eine Neigung des Systems (15) zu bestimmen, und mit einer Steuereinheit (16), um von dem mindestens einen Sensor (12, 12') erzeugte, insbesondere digitale, Sensordaten zu verarbeiten.

12. Verfahren zur automatisierten Neigungsausgleichung eines Transportfahrzeugs, insbesondere eines selbstangetriebenes Transportfahrzeug, vorzugsweise eines selbstangetriebenes Modulfahrzeug, beispielsweise eines Transportfahrzeugs nach einem der Ansprüche 1 bis 10 oder eines Transportfahrzeugverbands umfassend mindestens ein solches Transportfahrzeug, wobei das Transportfahrzeug ein Fahrwerk (1) und eine Hebeeinrichtung (7) aufweist, wobei das Fahrwerk (1) eine Ladefläche (4) und hintereinander angeordneten Radanordnungen (2, 2') umfasst, wobei die Ladefläche (4) durch die Hebeeinrichtung (7), beispielsweise die Radanordnungen (2, 2'), neigbar ist,
wobei von einer Steuereinheit (16) eine Neigung des Transportfahrzeugs, insbesondere der Ladefläche (4), und oder eines Transportguts mittels einer Sensoreinrichtung (11) mit mindestens einem Sensor (12, 12'), vorzugsweise kontinuierlich, insbesondere in regelmäßigen oder unregelmäßigen zeitlichen Abständen, bestimmt wird und wobei bei Überschreitung einer Maximalneigung ein Ausgleich der Neigung des Transportfahrzeugs, insbesondere der Ladefläche (4), von der Steuereinheit (16) durch Neigen der Ladefläche (4) mittels der Hebeeinrichtung (7) erfolgt.

13. Verfahren zur Vermeidung von Fehlbedienungen eines Transportfahrzeugs, insbesondere eines selbstangetriebenen Transportfahrzeugs, vorzugsweise eines selbstangetriebenen Modulfahrzeugs, beispielsweise eines Transportfahrzeugs nach einem der Ansprüche 1 bis 10 oder eines Transportfahrzeugverbands umfassend mindestens ein solches Transportfahrzeug, wobei das Transportfahrzeug ein Fahrwerk (1) und eine Hebeeinrichtung (7) aufweist, wobei das Fahrwerk (1) eine Ladefläche (4) und hintereinander angeordneten Radanordnungen (2, 2') umfasst, wobei die Ladefläche (4) durch die Hebeeinrichtung (7), beispielsweise die Radanordnungen (2, 2'), neigbar ist, umfassend die folgenden Verfahrensschritte:
- Bestimmung einer Neigung des Transportfahrzeugs, insbesondere der Ladefläche (4), und/oder eines Transportguts von einer Steuereinheit (16) unter Nutzung einer Sensoreinrichtung (11) mit mindestens einem Sensor (12, 12'),
- Freigeben einer manuellen Steuerung der Hebeeinrichtung (7) und/oder einer Fahrt des Transportfahrzeugs, wenn die erfasste Neigung des Transportfahrzeugs kleiner oder gleich einer Maximalneigung ist und
- Blockieren zumindest eines Teils der manuellen Steuerung der Hebeeinrichtung (7) und/oder Verlangsamen, insbesondere Anhalten, des Transportfahrzeugs, wenn die erfasste Neigung des Transportfahrzeugs größer als die Maximalneigung ist.

14. Verfahren nach Anspruch 13, **dadurch gekennzeichnet, dass** die Blockierung der manuellen Steuerung, beispielsweise durch Betätigung eines Bedienelements, aufhebbar ist.

15. Verfahren nach einem der Ansprüche 13 oder 14, **dadurch gekennzeichnet, dass** die Bestimmung der Neigung und somit die Freigabe und/oder die Blockierung der manuellen Steuerung kontinuierlich, insbesondere in regelmäßigen oder unregelmäßigen zeitlichen Abständen, erfolgt.
